# EUROPEAN PATENT SPECIFICATION

(11) **EP 3 351 152 B1**
(45) Date of publication and mention of the grant of the patent: **01.05.2019**
(21) Application number: 17162412.5
(22) Date of filing: 22.03.2017
(51) Int. Cl.: A47J 45/06

(54) **A SET OF COOKWARE**
KOCHGESCHIRRSATZ
ENSEMBLE DE BATTERIE DE CUISINE

(30) Priority: 18.01.2017 CN 201720057266 U
(43) Date of publication of application: 25.07.2018
(73) Proprietor: Zhejiang Zhongxin Cookware Co., Ltd., Yongkang Economic Development Zone Yongkang City Zhejiang (CN)
(72) Inventor: Chengshao, Hu, Yongkang City, Zhejiang (CN)
(74) Representative: Bendele, Tanja

(56) References cited:
- EP-A2- 0 511 938
- FR-A1- 2 883 149
- GB-A- 2 439 271
- JP-A- H10 153
- JP-A- 2008 284 027
- US-A- 3 648 887
- US-A1- 2009 049 650

## Description

### Technical field

The invention relates to a cooking pot and in particular to a set of cookware.

### Technical Background

A cooking pot is a kind of kitchen or cooking utensil. There are many kinds of common cooking pots such as woks, pans, frying pans and so on. In order to cook various meals, the average, modern family has a variety of different cooking pots, suited for different requirements. This variety of different cooking pots leads to problems, if the various cooking pots are stored or transported separately. If the various cooking pots are stacked in order to save space in storage or transportation, the occupied space can be reduced, but the cooking pots will cause each other bumps and other damages of the surface of the coating of the cooking pots, thus affecting the performance and quality of the cooking pots. The document US 2009/0049650 discloses a set of stackable cooking pots.

The problem to be solved was to provide a set of cookware comprising at least two different cooking pots that are stackable and thus enable space-saving storage and transport of the set of cookware. Another problem to be solved was to provide a set of cookware comprising at least two different cooking pots that are stackable without any damages being caused by the cooking pots touching each other.

The problem is solved by a set of cookware comprising at least two cooking pots, preferably at least two different cooking pots. Each cooking pot comprises a body and a handle that is connected to the body through the front end of the handle.

An upper support portion is provided on the top of the front end of the handle of each cooking pot and the bottom of the front end of the handle is provided with a lower support portion. The lower support portion forms the counterpart to the upper support portion.

The rear end of the handle of each cooking pot is provided with an opening and a locking element. The locking element forms the counterpart to the opening.

The at least two cooking pots are stackable, so that the lower support portion at the bottom of the front end of the handle of an upper cooking pot of the at least two cooking pots that is stacked above a lower cooking pot, abuts against the upper support portion at the top of the front end of the handle of the lower cooking pot. Thus, the bodies of the at least two cooking pots do not touch each other.

The locking element of the rear end of the handle of the upper cooking pot is fixable in the opening at the rear end of the handle of the lower cooking pot.

The upper end of the opening on the rear end of the handle of each cooking pot is provided with a protrusion and the end of the locking element on the rear end of the handle is provided with a platform.

The locking element on the rear end of the handle of the upper cooking pot is insertable into the opening at the rear end of the handle of the lower cooking pot.

The locking element on the rear end of the handle of the upper cooking pot is fixable in the opening at the rear end of the handle of the lower cooking pot by the platform and the protrusion constraining each other.

The protrusion projects in a direction towards the body and the platform projects away from the body.

A landing is provided in the lower end of the opening and the locking element is provided with an edge.

The locking element on the rear end of the handle of the upper cooking pot is insertable into the opening on the rear end of the handle of the lower cooking pot.

The locking element on the rear end of the handle of the upper cooking pot is fixable in the opening on the rear end of the handle of the lower cooking pot by the landing and the edge constraining each other.

The landing projects in a direction away from the body, and said edge projects downwardly.

The lower support portion and the upper support portion are curved.

The front end of the handle is connected to the body through a connecting member. The connecting member is releasable from the body, so that the handle is releasable from the body by releasing the connecting member. The connecting member is releasable from the body at the touch of a button.

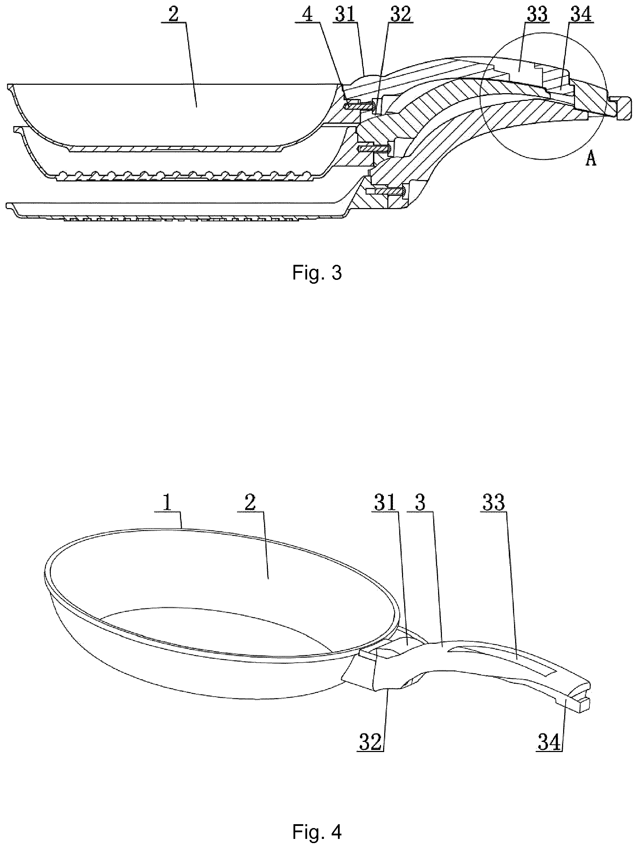

The platform provides a pin projecting upwards, and whereby the protrusion provides a hole. The hole forms the counterpart to the pin, so that the platform of the upper cooking pot is lockable at the protrusion of the lower cooking pot by being hooked with said pin into said hole. When locked, the platform of the upper cooking pot is releasable from the lower cooking pot by pushing onto the pin projecting through the hole of the protrusion of the lower cooking pot.

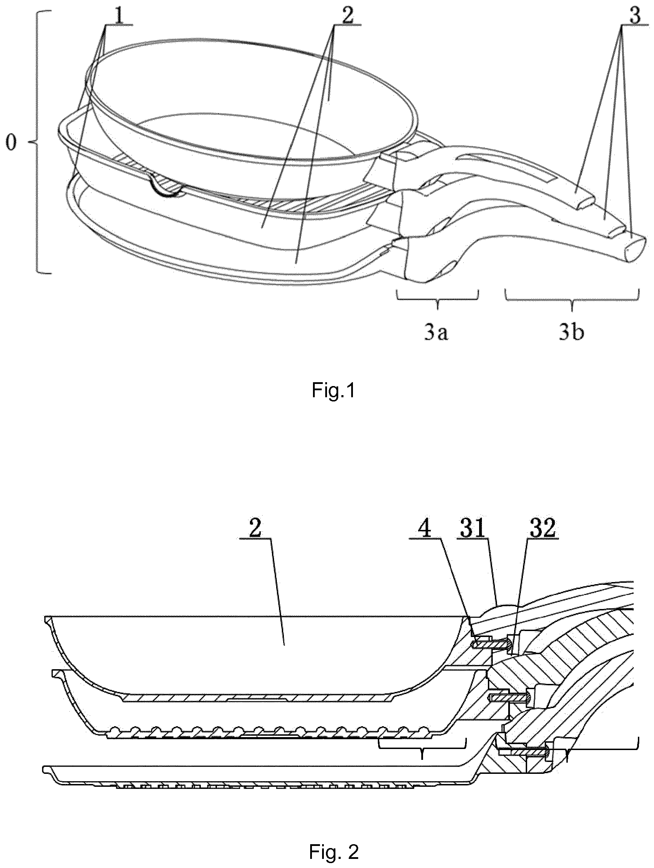

Figure 1: Stacked set of cookware
   - **0**: set of cookware
   - **1**: cooking pot
   - **2**: body
   - **3**: handle
   - **3a**: front end of the handle
   - **3b**: rear end of the handle
Figure 2: Stacked set of cookware
   - **2**: body
   - **4**: connecting member
   - **31**: upper support portion
   - **32**: lower support portion
Figure 3: Stacked set of cookware
   - **2**: body
   - **4**: connecting member
   - **31**: upper support portion
   - **32**: lower support portion
   - **33**: opening
   - **34**: locking element
Figure 4: cooking pot
   - **1**: cooking pot
   - **2**: body
   - **3**: handle

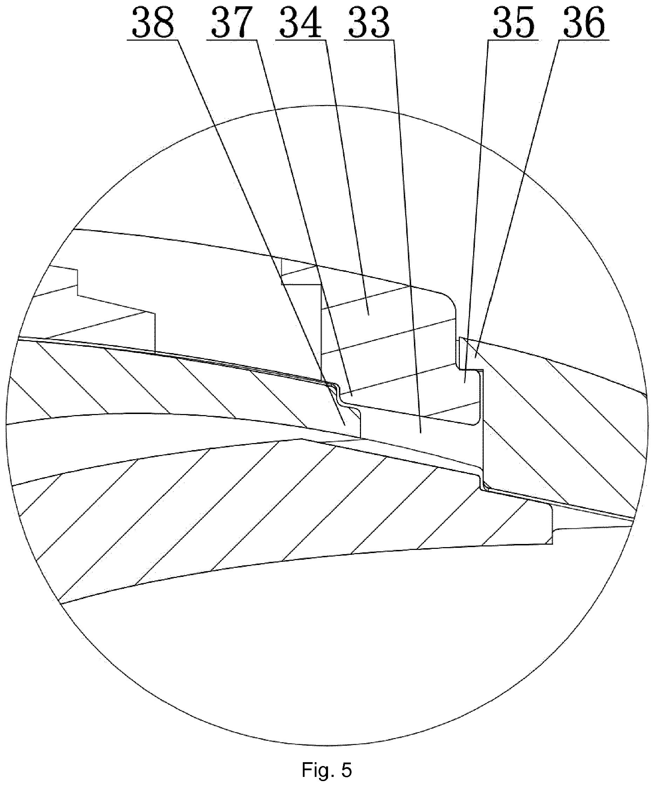

   - **31**: upper support portion
   - **32**: lower support portion
   - **33**: opening
   - **34**: locking element
Figure 5: Zoom-in A according to Figure 3
   - **33**: opening
   - **34**: locking element
   - **35**: platform
   - **36**: protrusion
   - **37**: edge
   - **38**: landing

## Claims

1. A set of cookware (0) comprising at least two cooking pots (1), whereby each cooking pot (1) comprises a body (2) and a handle (3), and whereby the handle (3) is connected to the body (2) through the front end of the handle (3a),
whereby
an upper support portion (31) is provided on the top of the front end of the handle (3a), and the bottom of the front end of the handle (3a) is provided with a lower support portion (32) forming the counterpart to the upper support portion (31), and whereby the rear end of the handle (3b) is provided with an opening (33) and a locking element (34) forming the counterpart to the opening (33), and whereby the at least two cooking pots (1) are stackable, whereby the lower support portion (32) at the bottom of the front end of the handle (3a) of an upper cooking pot (1) of the at least two cooking pots (1) that is stacked above a lower cooking pot (1), abuts against the upper support portion at the top of the front end of the handle (3a) of the lower cooking pot (1), whereby the body (2) of the upper cooking pot (1) of the at least two cooking pots, does not touch the body (2) of the lower cooking pot (1), **characterized in that**, a landing (38) is provided in the lower end of the opening (33) and the locking element (34) is provided with an edge (37), whereby the locking element (34) on the rear end of the handle (3b) of the upper cooking pot (1) is insertable into the opening (33) on the rear end of the handle (3b) of the lower cooking pot (1), and whereby the locking element (34) on the rear end of the handle (3b) of the upper cooking pot (1) is fixable in the opening (33) on the rear end of the handle (3b) of the lower cooking pot (1) by the landing (38) and the edge (37) constraining each other.

2. A set of cookware according to claim 1, **characterized in that** in the upper end of the opening (33) on the rear end of the handle (3b) is provided with a protrusion (36) and the end of the locking element (34) on the rear end of the handle (3b) is provided with a platform (35), whereby the locking element (34) on the rear end of the handle (3b) of the upper cooking pot (1) is insertable into the opening (33) at the rear end of the handle (3b) of the lower cooking pot (1), and whereby the locking element (34) on the rear end of the handle (3b) of the upper cooking pot (1) is fixable in the opening (33) at the rear end of the handle (3b) of the lower cooking pot (1) by the platform (35) and the protrusion (36) constraining each other.

3. A set of cookware according to claim 2, **characterized in that** said protrusion (36) projects in a direction towards the body (2) and said platform (35) projects away from the body (2).

4. A set of cookware according to claim 3, **characterized in that** said landing (38) projects in a direction away from the body (2), and said edge (37) projects downwardly.

5. A set of cookware according to claim 1, **characterized in that** the lower support portion (32) and the upper support portion (31) are curved.

6. A set of cookware according to claim 1, **characterized in that**, the front end of the handle (3a) is connected to the body (2) through a connecting member (4).

7. A set of cookware according to claim 6, **characterized in that**, the connecting member (4) is releasable from the body (2), and whereby the handle (3) is releasable from the body (2) by releasing the connecting member (4).

8. A set of cookware according to claim 7, **characterized in that**, the connecting member (4) is releasable from the body (2) at the touch of a button.

9. A set of cookware according to claim 2 **characterized in that**, the platform (35) provides a pin projecting upwards, and whereby the protrusion (36) provides a hole forming the counterpart to the pin, and whereby the platform (35) of the upper cooking pot (1) is lockable at the protrusion (36) of the lower cooking pot (1) by being hooked with said pin into said hole.

10. A set of cookware according to claim 9, **characterized in that**, the platform (35) of the upper cooking pot (1) is releasable from the lower cooking pot (1) by pushing onto the pin projecting through the hole of the protrusion (36) of the lower cooking pot (1).

## Patentansprüche

1. Kochgeschirrsatz (0), der mindestens zwei Kochgefäße (1) umfasst, wobei jeder Kochgefäß (1) einen Körper (2) und einen Griff (3) umfasst, und wobei der Griff (3) mit dem Körper (2) durch das vordere Ende des Griffs (3a) verbunden ist,
wobei
ein oberer Stützabschnitt (31) an der Oberseite des vorderen Endes des Griffs (3a) vorgesehen ist, und der Boden des vorderen Endes des Griffs (3a) mit einem unteren Stützabschnitt (32) versehen ist, der das Gegenstück zum oberen Stützabschnitt (31) bildet, und wobei das hintere Ende des Griffs (3b) mit einer Öffnung (33) und einem Verriegelungselement (34), das das Gegenstück zur Öffnung (33) bildet, versehen ist und, wobei die mindestens zwei Kochgefäße (1) stapelbar sind, wobei der untere Stützabschnitt (32) am unteren Ende des vorderen Endes des Griffs (3a) eines oberen Kochgefäßes (1) der mindestens zwei Kochgefäße (1), welcher oberhalb eines unteren Kochgefäßes (1) gestapelt ist, an dem oberen Stützabschnitt am oberen Ende des vorderen Endes des Griffs (3a) des unteren Kochgefäßes (1) anliegt, wodurch der Körper (2) des oberen Kochgefäßes (1) der mindestens zwei Kochgefäße, nicht den Körper (2) des unteren Kochgefäßes (1) berührt,
**dadurch gekennzeichnet, dass**
am unteren Ende der Öffnung ein Absatz (38) vorgesehen ist (33) und das Verriegelungselement (34) mit einer Kante (37) versehen ist, wodurch das Verriegelungselement (34) am hinteren Ende des Griffs (3b) des oberen Kochgefäßes (1) in die Öffnung (33) am hinteren Ende des Griffs (3b) des unteren Kochgefäßes (1) einsetzbar ist, und wobei das Verriegelungselement (34) am hinteren Ende des Griffs (3b) des oberen Kochgefäßes (1) in die Öffnung (33) am hinteren Ende des Griffs (3b) des unteren Kochgefäßes (1) fixierbar ist, dadurch, dass der Absatz (38) und die Kante (37) sich gegenseitig einschränken.

2. Kochgeschirrsatz nach Anspruch 1, **dadurch gekennzeichnet, dass** im oberen Ende der Öffnung (33) am hinteren Ende des Griffs (3b) ein Vorsprung (36) und das Ende des Verriegelungselements (34) am hinteren Ende des Griffs (3b) mit einer Plattform (35) vorgesehen ist, wobei das Verriegelungselement (34) am hinteren Ende des Griffs (3b) des oberen Kochgefäßes (1) in die Öffnung (33) am hinteren Ende des Griffs (3b) des unteren Kochgefäßes (1) einsetzbar ist und wobei das Verriegelungselement (34) am hinteren Ende des Griffs (3b) des oberen Kochgefäßes (1) fixierbar in der Öffnung (33) am hinteren Ende des Griffs (3b) des unteren Kochgefäßes (1) ist durch die Plattform (35) und den Vorsprung (36), die sich gegenseitig einschränken.

3. Kochgeschirrsatz nach Anspruch 2, **dadurch gekennzeichnet, dass** besagter Vorsprung (36) in Richtung auf den Körper (2) vorsteht und die Plattform (35) vom Körper (2) weg vorsteht.

4. Kochgeschirrsatz nach Anspruch 3, **dadurch gekennzeichnet, dass** besagter Absatz (38) in eine Richtung vom Körper (2) weg vorsteht und die Kante (37) nach unten vorsteht.

5. Kochgeschirrsatz nach Anspruch 1, **dadurch gekennzeichnet, dass** der untere Stützabschnitt (32) und der obere Stützabschnitt (31) gekrümmt sind.

6. Kochgeschirrsatz nach Anspruch 1, **dadurch gekennzeichnet, dass** das vordere Ende des Griffs (3a) durch ein Verbindungselement (4) mit dem Körper (2) verbunden ist.

7. Kochgeschirrsatz nach Anspruch 1, **dadurch gekennzeichnet, dass** das Verbindungselement (4) vom Körper (2) lösbar ist und wobei der Griff (3) durch Lösen des Verbindungselements vom Körper (2) lösbar ist (4).

8. Kochgeschirrsatz nach Anspruch 7, **dadurch gekennzeichnet, dass** das Verbindungselement (4) auf Knopfdruck vom Körper (2) lösbar ist.

9. Kochgeschirrsatz nach Anspruch 1, **dadurch gekennzeichnet, dass** die Plattform (35) einen nach oben ragenden Bolzen vorsieht, und wobei der Vorsprung (36) ein Loch bereitstellt, das das Gegenstück zu dem Bolzen bildet, und wobei die Plattform (35) des oberen Kochgefäßes (1) am Vorsprung (36) des unteren Kochgefäßes (1) arretierbar ist, indem sie mit dem Bolzen in das besagte Loch eingehakt wird.

10. Kochgeschirrsatz nach Anspruch 9, **dadurch gekennzeichnet, dass** die Plattform (35) des oberen Kochgefäßes (1) vom unteren Kochgefäß (1) lösbar ist, indem auf den Bolzen gedrückt wird, der durch das Loch des Vorsprungs (36) des unteren Kochgefäßes (1) ragt.

## Revendications

1. Ensemble de batterie de cuisine (0) comprenant au moins deux marmites (1), chaque marmite (1) comprenant un corps (2) et une poignée (3), et par lequel la poignée (3) est reliée au corps (2) à travers l'extrémité avant de la poignée (3a),
par lequel
une partie de support supérieure (31) est prévue sur la partie supérieure de l'extrémité avant de la poignée (3a) et la partie inférieure de l'extrémité avant de la poignée (3a) est pourvue d'une partie de support inférieure (32) formant la contrepartie de la partie de support supérieure (31), et par laquel l'extrémité arrière de la poignée (3b) est munie d'une ouverture (33) et d'un élément de verrouillage (34) formant la contrepartie de l'ouverture (33), et en ce que les deux au moins marmites (1) sont empilables, la partie de support inférieure (32) se trouvant au bas de l'extrémité avant de la poignée (3a) d'une marmite supérieure (1) d'au moins deux marmites (1) empilées au-dessus d'une marmite inférieure (1), est en butée contre la partie supérieure de support située au sommet de l'extrémité avant de la poignée (3a) de la marmite inférieure (1), le corps (2) de la marmite supérieure (1) des au moins deux marmites, ne touche pas le corps (2) de la marmite inférieure (1), **caractérisé en ce qu** 'un palier (38) est prévu dans l'extrémité inférieure de l'ouverture (33) et l'élément de verrouillage (34) est muni d'un bord (37), l'élément de verrouillage (34) situé à l'extrémité arrière de la poignée (3b) de la marmite supérieure (1) pouvant être inséré dans l'ouverture (33) sur l'extrémité arrière de la poignée (3b) de la marmite inférieure (1), l'élément de verrouillage (34) sur l'extrémité arrière de la poignée (3b) de la marmite supérieure (1) pouvant être fixé dans l'ouverture (33) de l'extrémité arrière de la poignée (3b) de la marmite inférieure (1) par le palier (38) et le bord (37) se contraignant mutuellement.

2. Ensemble de batterie de cuisine selon la revendication 1, **caractérisé en ce que** l'extrémité supérieure de l'ouverture (33) sur l'extrémité arrière de la poignée (3b) est pourvue d'une saillie (36) et l'extrémité de l'élément de verrouillage (34) à l'extrémité arrière de la poignée (3b) est pourvue d'une plate-forme (35), l'élément de verrouillage (34) situé à l'extrémité arrière de la poignée (3b) de la marmite supérieure (1) pouvant être insérée dans l'ouverture (33) à l'extrémité arrière de la poignée (3b) de la marmite inférieure (1) et dans lequel l'élément de verrouillage (34) à l'extrémité arrière de la poignée (3b) de la marmite supérieure (1) peut être fixé dans l'ouverture (33) à l'extrémité arrière de la poignée (3b) de la marmite inférieure (1) au moyen de la plate-forme (35) et de la saillie (36) qui se contraignent mutuellement.

3. Ensemble de batterie de cuisine selon la revendication 2, **caractérisé en ce que** ladite saillie (36) fait saillie en direction du corps (2) et ladite plate-forme (35) fait saillie à l'opposé du corps (2).

4. Ensemble de batterie de cuisine selon la revendication 3, **caractérisée en ce que** ledit palier (38) fait saillie dans une direction opposée au corps (2), et ledit bord (37) fait saillie vers le bas.

5. Ensemble de batterie de cuisine selon la revendication 1, **caractérisé en ce que** la partie de support inférieure (32) et la partie de support supérieure (31) sont courbes.

6. Ensemble de batterie de cuisine selon la revendication 1, **caractérisé en ce que** l'extrémité avant de la poignée (3a) est reliée au corps (2) par un élément de connexion (4).

7. Ensemble de batterie de cuisine selon la revendication 1, **caractérisé en ce que** l'élément de connexion (4) peut être libéré du corps (2) et **en ce que** la poignée (3) peut être libérée du corps (2) en libérant l'élément de connexion. (4).

8. Ensemble de batterie de cuisine selon la revendication 7, **caractérisé en ce que** l'élément de connexion (4) est détachable du corps (2) en appuyant sur un bouton.

9. Ensemble de batterie de cuisine selon la revendication 1, **caractérisé en ce que** la plate-forme (35) comporte une goupille faisant saillie vers le haut et **en ce que** la saillie (36) forme un trou formant la contrepartie de la goupille et **en ce que** la plate-forme (35) de la marmite supérieure (1) est verrouillable au niveau de la saillie (36) de la marmite inférieure (1) en étant accrochée avec ladite goupille dans ledit trou.

10. Ensemble de batterie de cuisine selon la revendication 9, **caractérisé en ce que** la plate-forme (35) de la marmite supérieure (1) peut être libérée de la marmite inférieure (1) en poussant sur la goupille faisant saillie à travers le trou de la saillie. (36) de la marmite inférieure (1).
